# EUROPEAN PATENT APPLICATION

(11) **EP 2 455 716 A2**
(43) Date of publication of application: **23.05.2012**
(21) Application number: 11188653.7
(22) Date of filing: 10.11.2011
(51) Int. Cl.: G01C 22/00

(54) **Walking Situation Detection Device, Walking Situation Detection Method, and Walking Situation Detection Program**

(30) Priority: 17.11.2010 JP 2010257179
(71) Applicant: Sony Corporation, Tokyo 108-0075 (JP)
(72) Inventor: Kimishima, Masato, Minato-ku, Tokyo 108-0075 (JP)
(74) Representative: Mills, Julia

(57) **Abstract**

A walking situation detection device includes an acquisition unit which acquires an acceleration value according to an action of a user in a predetermined cycle, an interval detection unit which detects a first time interval and a second time interval from the acceleration value, a determination unit which determines a position where the user carries a terminal in his or her body based on a ratio of the first time interval to the second time interval, and a number of steps determination unit which determines the number of steps of the user based on the determination result of the determination unit.

## Description

The present disclosure relates to a walking situation detection device, a walking situation detection method, and a walking situation detection program, which are preferably applied to a smartphone that has a navigation function for estimating the current position of a user based on, for example, the number of steps of the user.

In recent years, smartphones which are mobile telephones with a highly advanced arithmetic processing capability have been widely distributed. Such smartphones can realize various functions by installing applications, and there is a navigation function as an example.

When the navigation function is executed, a smartphone can calculate the current position based on GPS (Global Positioning System) signals received by, for example, an internal GPS antenna, and display a map screen of the vicinity.

In addition, at indoor places where GPS signals are not received, a smartphone can calculate a movement direction and a movement distance of a user based on a detection result of an acceleration value by, for example, an acceleration sensor, or the like, to estimate the current position.

For example, a smartphone extracts a vertical direction component (hereinafter, referred to as a vertical acceleration value) from acceleration values obtained by a three-axis acceleration sensor while a user walks, and obtains information regarding the walking situation (hereinafter, referred to as walk information) such as whether or not the user is walking, and what the number of steps is during walking, based on the waveform thereof. Then, the smartphone calculates a movement distance by multiplying the obtained number of steps by an average width of step of the user, and estimates the current position by also detecting the movement direction.

As a technique of obtaining walk information such as whether or not a user is walking, or what the number of steps is during walking, or the like, there is a technique for obtaining the number of steps by performing a predetermined analysis process for a signal waveform of a vertical acceleration value.

The technique, however, is problematic in that it is difficult to obtain the number of steps unless the user has walked a certain number of steps (for example, about ten steps) because of the principle of an analysis process, and calculation of the current position is considerably delayed, whereby the real-time feature deteriorates.

The lack of the real-time feature may not be very problematic in a simple pedometer, but in the navigation function, there is concern that the lack of real-time feature may lead to incorrect calculation of the current position of a user, thereby considerably impairing the practicality thereof.

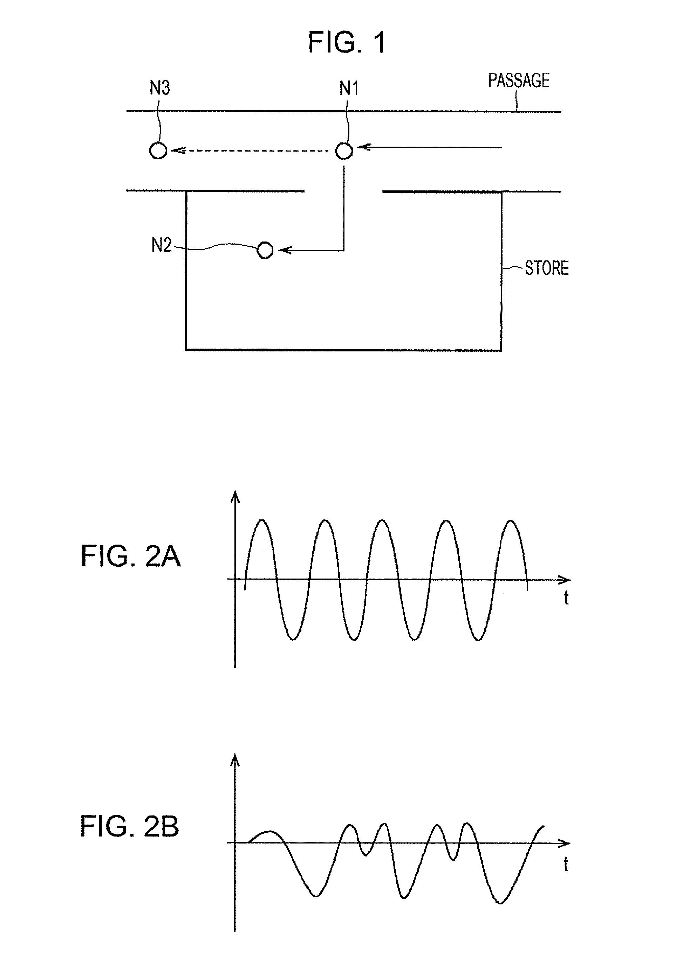

A case is assumed, in which, during, for example, execution of the navigation function of a smartphone, a user walks through a passage as shown in Fig. 1, stops once at a position N1, which is in front of a shop, then resumes walking, and moves to a position N2, which is the real destination, as shown by the solid arrow in the drawing.

Herein, when detection of a walking situation after walking is resumed is delayed, there is a possibility that a smartphone is not able to reflect a change in the movement direction for the time being on the estimation of the current position, and as a result, there is concern that the smartphone may estimate a wrong position such as a position N3 as the current position, as shown by the dotted arrow.

In regard to this, a technique has been proposed in which a walking situation of a user immediately after walking is resumed is detected by calculation using similarity of waveforms appearing in vertical acceleration values to obtain the number of steps of the user (for example, refer to Fig. 18 of Japanese Unexamined Patent Application Publication No. 2007-244495).

A case where vertical acceleration values detected by the acceleration sensor periodically appear in substantially uniform waveforms, for example, as shown in Fig. 2A and a case where the vertical acceleration values appear in waveforms with difference sizes and shapes as shown in Fig. 2B may be considered.

In the latter case, a smartphone has problems in that it is difficult to determine whether or not the obtained waveforms indicates every individual walked step, and it is very difficult to correctly detect the walking situation.

It is desirable for the disclosure to propose a walking situation detection device, a walking situation detection method, and a walking situation detection program, which can precisely detect the walking situation of a user regardless of carrying positions while securing the real-time feature.

Various respective aspects and features of the invention are defined in the appended claims. Combinations of features from the dependent claims may be combined with features of the independent claims as appropriate and not merely as explicitly set out in the claims.

In the disclosure for addressing the above problem, an acceleration value according to an action of a user is acquired in a predetermined cycle, a first time interval and a second time interval are detected from the acceleration value, a position where the user carries a terminal in his or her body is determined based on a ratio of the first time interval to the second time interval, and a number of steps of the user is determined based on the determination.

In the disclosure, by using different ratios of the first time interval to the second time interval according to positions where the user carries the terminal in his or her body, it is possible to correctly determine the position where the user carries the terminal in his or her body and then determine the number of steps, and therefore, it is possible to output appropriate walk information according to every individual step of the user regardless of the carrying position of the user.

According to the disclosure, by using different ratios of the first time interval to the second time interval according to positions where the user carries the terminal in his or her body, it is possible to correctly determine the position where the user carries the terminal in his or her body and then determine the number of steps, and therefore, it is possible to output appropriate walk information according to every individual step of the user regardless of the carrying position of the user. Therefore, the disclosure can realize a walking situation detection device, a walking situation detection method, and a walking situation detection program which can detect the situation of walking of a user with high accuracy regardless of a carrying position of the device while securing the real-time feature.

Embodiments of the invention will now be described with reference to the accompanying drawings, throughout which like parts are referred to by like references, and in which:
Fig. 1 is a schematic diagram showing deviation in the estimation of the current position caused by delay in detecting a walking situation;
Figs. 2A and 2B are schematic diagrams showing waveforms of vertical acceleration values;
Fig. 3 is a schematic block diagram showing a configuration of a smartphone;
Fig. 4 is a schematic diagram showing a display of a navigation screen;
Fig. 5 is a schematic block diagram showing functional blocks in a walk information generation process;
Fig. 6 is a schematic diagram showing a direction of acceleration and a vertical direction component thereof;
Figs. 7A and 7B are schematic diagrams showing changes in waveforms by an LPF process;
Fig. 8 is a schematic diagram showing detection of a landing half-wave;
Fig. 9 is a schematic diagram showing state transitions by vertical acceleration values;
Fig. 10 is a schematic diagram showing comparison of areas of landing half-waves;
Fig. 11 is a schematic diagram showing carrying positions of a smartphone;
Figs. 12A and 12B are schematic diagrams showing landing half-wave intervals and landing half-wavelengths;
Fig. 13 is a schematic diagram showing the frequency distribution of a landing half-wave ratio for each carrying position;
Fig. 14 is a schematic diagram showing an output timing of walk information;
Fig. 15 is a flowchart showing the procedure of a walk information generation process;
Fig. 16 is a flowchart showing a vertical component estimation routine;
Fig. 17 is a flowchart showing a landing half-wave detection routine; and
Fig. 18 is a flowchart showing the number of steps determination output routine.

Hereinafter, embodiments for implementing the disclosure (hereinafter, referred to as embodiments) will be described using drawings. Description will be provided in the following order.
1. Embodiment
2. Other Embodiment

### <1. Embodiment>

### [1-1. Configuration of Smartphone]

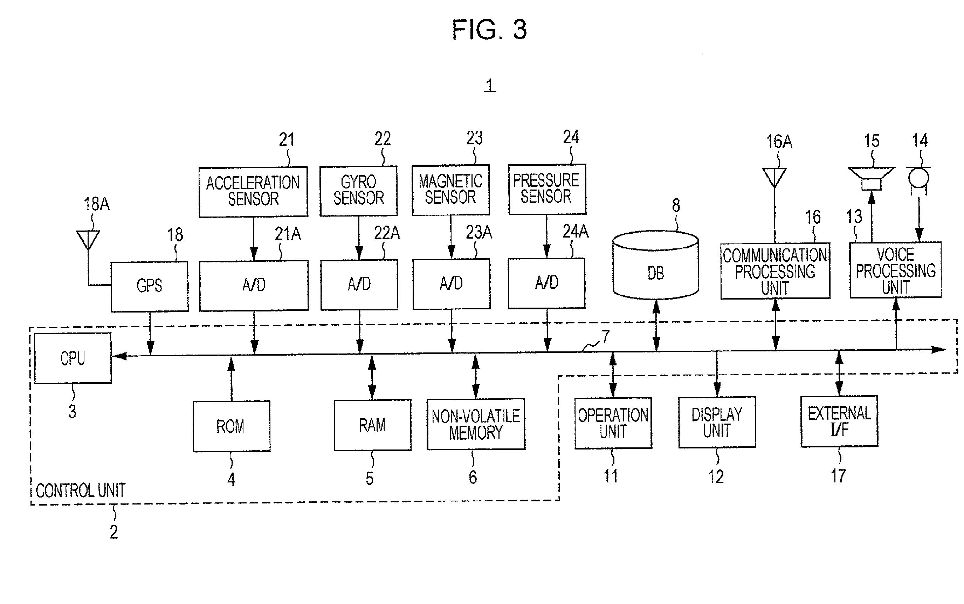

As shown in Fig. 3, a smartphone 1 is configured such that each unit is connected to a control unit 2 as the center, and the control unit 2 is made to control all the units.

A CPU (Central Processing Unit) 3 of the control unit 2 reads a basic program, various application programs, or the like from a ROM (Read Only Memory) 4, a non-volatile memory 6, or the like via a bus 7, using a RAM (Random Access Memory) 5 as a working area.

A database (DB) 8 is, for example, a flash memory, or the like, and stores various data such as phonebook data, music data, image data, map data, and the like each in a predetermined database format.

An operation unit 11 includes a touch panel, various buttons, or the like, and receives operation instructions of a user and supplies operation signals to the CPU 3. A display unit 12 includes, for example, a liquid crystal panel, and generates and displays a display screen based on display data supplied via a bus 7. In addition, the touch panel of the operation unit 11 is constituted by the surface of the liquid crystal panel of the display unit 12.

A voice processing unit 13 converts voice collected by a microphone 14 to voice data in a digital format and supplies the data via the bus 7, and converts the voice data acquired via the bus 7 and supplies the data to a speaker 15 to output as a voice.

A communication processing unit 16 is wirelessly connected to a base station (not shown in the drawing) via an antenna 16A, transmits various data supplied via the bus 7 to the base station, and receives various data transmitted from the base station to supply to the bus 7.

An external interface (I/F) 17 includes, for example, a USB (Universal Serial Bus) terminal, and is made to exchange data between a computer device (not shown in the drawing) connected through a USB cable (not shown in the drawing).

A GPS circuit 18 receives GPS signals transmitted from a GPS satellite (not shown in the drawing) with a GPS antenna 18A, and supplies positioning data subjected to a predetermined demodulation process, a decoding process, or the like to the bus 7.

An acceleration sensor 21 detects acceleration in three axis directions, which are orthogonal to one another, generates acceleration signals, and converts the signals into an acceleration value A1 in a digital format with a sampling rate of 25 [Hz] by an A/D (Analog/Digital) conversion circuit 21A to supply to the bus 7. The acceleration value A1 is a value indicating acceleration generated according to an action of a user when the user carries the smartphone 1.

A gyro sensor 22 detects an angle velocity around the three axes, which are orthogonal to one another, generates angle velocity signals, and converts the signals into an angle velocity value in a digital format with a predetermined sampling rate by an A/D conversion circuit 22A to supply to the bus 7.

A magnetic sensor 23 generates magnetic signals by detecting the direction of a magnetic field, and converts the signals into a magnetic value in a digital format with a predetermined sampling rate by an A/D conversion circuit 23A to supply to the bus 7.

A pneumatic sensor 24 generates pressure signals by detecting pressure, and converts the signals into a pressure value in a digital format with a predetermined sampling rate by an A/D conversion circuit 24A to supply to the bus 7.

With the configuration, if the control unit 2 receives, for example, an instruction of executing a calling function from the user via the operation unit 11, the control unit 2 executes a predetermined calling program, and is wirelessly connected to a base station by the communication processing unit 16 to transmit a voice, which is collected by the microphone 14 and made into data, to a party, and outputs voice data transmitted from the party through the speaker 15.

In addition, if the control unit 2 receives an instruction of executing a music playback function from the user through the operation unit 11, the control unit 2 executes a predetermined music playback program, reads music data in a compressed state from the database 8, causes the voice processing unit 13 to implement a predetermined decoding process and the speaker 15 to output the voice.

Furthermore, if the control unit 2 receives an instruction of executing, for example, a navigation function from the user through the operation unit 11, the control unit 2 executes a predetermined navigation program, and calculates the latitude, longitude, and altitude of the current position based on positioning data obtained by the GPS circuit 18.

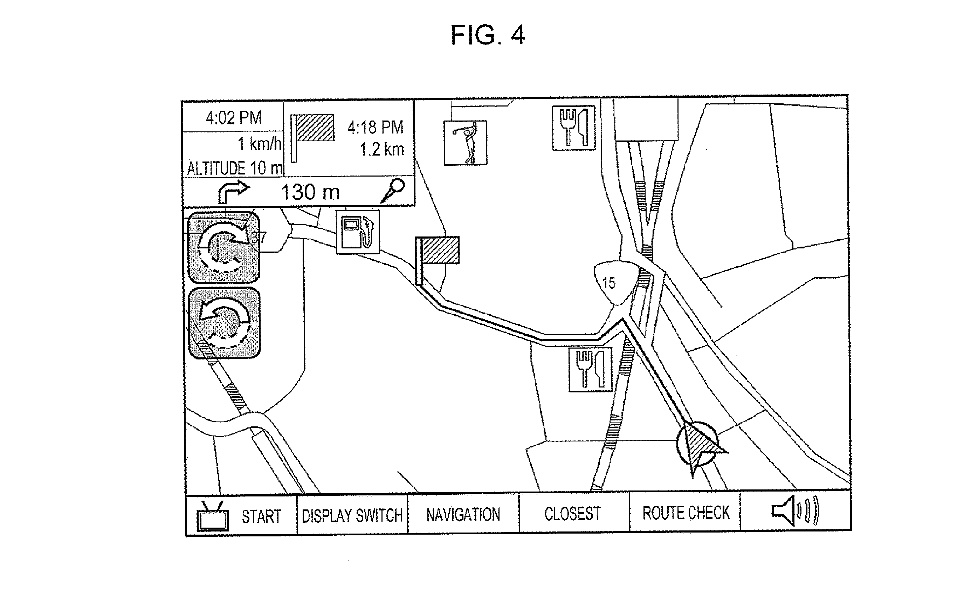

In addition, the control unit 2 reads map data of the range according to the calculated current position from the database 8 as shown in Fig. 4, and causes the display unit 12 to display the map as a navigation screen together with a predetermined mark for the current position and the route of a designated destination.

At this moment, the control unit 2 also corrects the current position by using an acceleration value A1 by the acceleration sensor 21, an angle velocity value by the gyro sensor 22, a magnetic value by the magnetic sensor 23, a pressure value by the pneumatic sensor 24, and the like.

As such, the smartphone 1 is set to realize various functions of the calling function, the music playback function, the navigation function, and the like by executing various application programs according to operation instructions of the user.

### [1-2. Generation of Walk Information]

When the navigation function described above is to be realized, the control unit 2 generates walk information indicating whether or not the user is walking, the number of steps in the case of walking, and the like as a walking situation of the user so as to use the information in estimation of the current position.

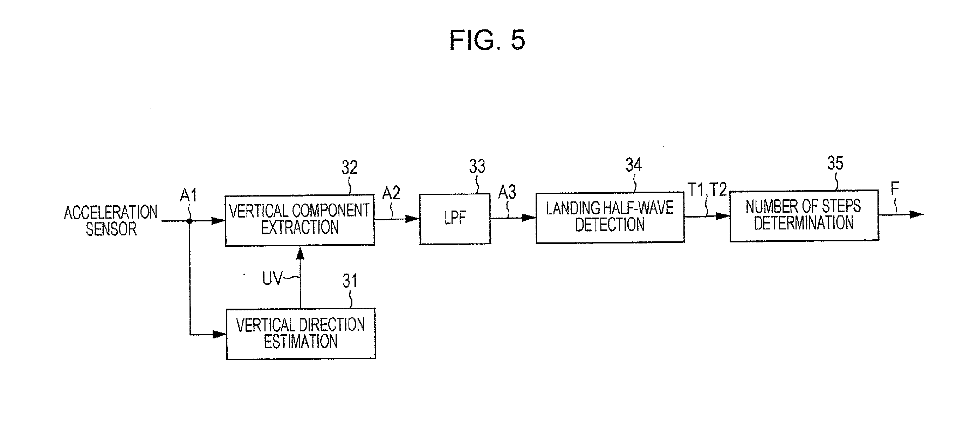

At this moment, the control unit 2 generates walk information F based on the acceleration value A1 generated according to an action of the user after going through a process which is constituted by a plurality of functional blocks and implemented by each of the functional blocks as shown in Fig. 5, by executing a walk information generation program.

### [1-2-1. Generation of Vertical Acceleration Value]

In other words, the control unit 2 sequentially supplies the acceleration value A1 obtained by the acceleration sensor 21 (Fig. 3) in the cycle of 25 [Hz] to a vertical direction estimation unit 31 and a vertical component extraction' unit 32.

The vertical direction estimation unit 31 and the vertical component extraction unit 32 extract a component of the vertical direction from the acceleration value A1, which is a three-dimensional vector value, according to the technique as shown in Japanese Unexamined Patent Application Publication No. 2007-226371.

Specifically, the vertical direction estimation unit 31 calculates the average value of the acceleration value A1 for the past three seconds, and supplies the unit vector to the vertical component extraction unit 32 as a vertical unit vector UV.

Herein, it is assumed that, the acceleration value A1 of each time has various directions according to the orientation of the smartphone 1, the state of the user, and the like, but the orientation thereof when being carried is substantially consistent, and acceleration constantly applied to the user is dominantly gravity. For this reason, if the average value for a certain period of time is calculated, it is considered that the value generally has the vertical direction.

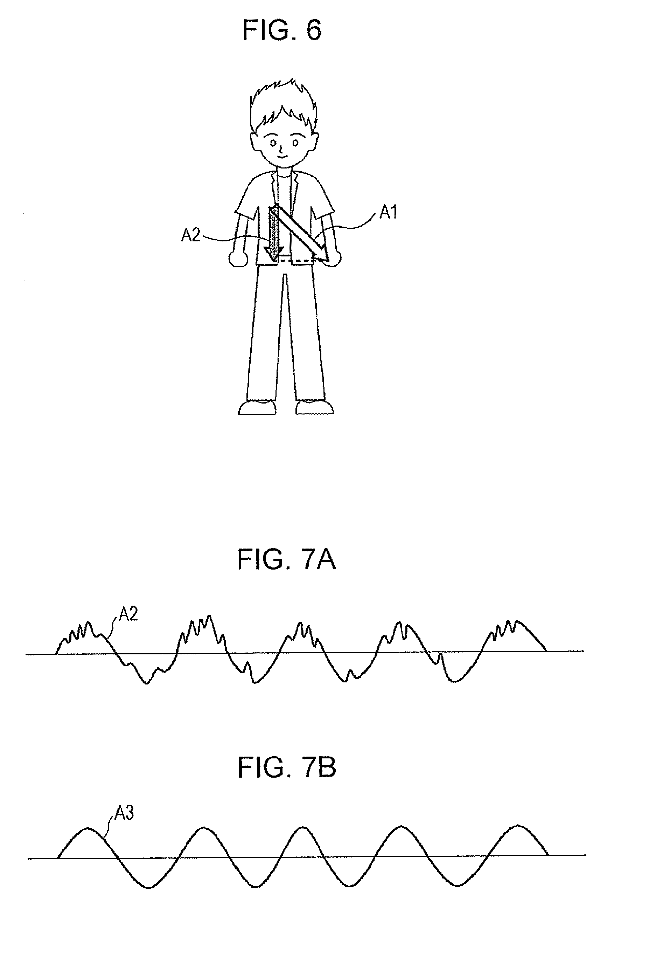

The vertical direction extraction unit 32 calculates the inner product of the acceleration value A1 and the vertical unit vector UV, both of which are three-dimensional, to extract the vertical component of the acceleration value A1 as shown in Fig. 6, and supplies the vertical component to the LPF (Low Pass Filter) unit 33 as a vertical acceleration value A2. Herein, the vertical acceleration value A2 is the one-dimensional value indicating the acceleration in the vertical direction applied to the smartphone 1.

The LPF unit 33 includes an IIR (Infinite Impulse Response) filter, generates a vertical acceleration value A3 only of low-frequency components as shown in Fig. 7B by removing components of equal to or higher than a predetermined cutoff frequency from the vertical acceleration value A2 shown in Fig. 7A, and supplies the vertical acceleration value A3 to a landing half-wave detection unit 34.

Such an LPF process is performed because the cycle in walking of the user (hereinafter, referred to as a walk pace TW) is generally about 1 to 2 [Hz] and low-frequency components are mainly used in later processes.

### [1-2-2. Detection of Landing Half-Wave]

The landing half-wave detection unit 34 detects waveform portions caused by walking of the user among waveforms included in the vertical acceleration value A3.

Generally, when the user of the smartphone 1 is walking, the vertical acceleration value A3 draws waveforms that cyclically fluctuate to positive and negative values as shown in Fig. 7B, and is at a level of equal to or lower than zero particularly when the feet of the user land.

In addition, a case may be assumed in which the vertical acceleration value A3 is at a level of equal to or lower than zero by an impact from outside, an operation of the user, or the like, but in such a case, it is considered that the cycle is short or the peak level is low.

Thus, the landing half-wave extraction unit 34 focuses on negative half-waves, which are at a level of equal to or lower than zero, and if the half-waves satisfy a predetermined condition, the landing half-wave extraction unit determines that the half-waves are half-waves caused by landing during walking (hereinafter, referred to as landing half-waves HW).

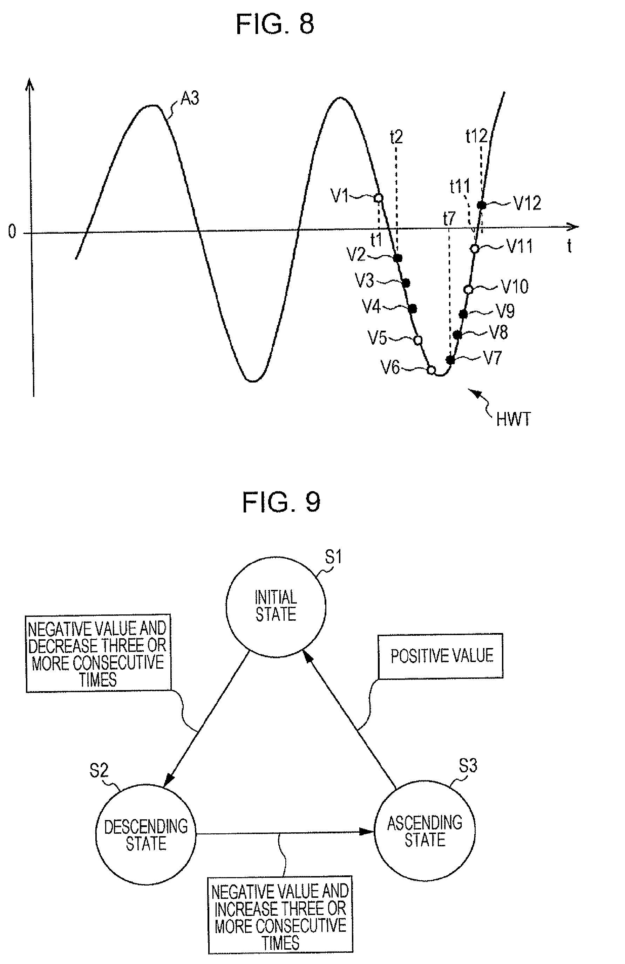

In addition, the landing half-wave extraction unit 34 classifies a state relating to a value of the vertical acceleration value A3 into a descending state S2 in which the value is negative and descending, an ascending state S3 in which the value is negative and ascending, and an initial state S1 which is neither of the states, as shown in Fig. 9, and causes the value to be transited between each of the states.

Specifically, the landing half-wave extraction unit 34 detects a time point t2 such that, first, the vertical acceleration value A3 is decreasing, a positive value V1 is marked at a given time point t1, and next, a negative value V2 is marked at the time point t2, as shown in Fig. 8 corresponding to Fig. 7B. At this moment, the landing half-wave extraction unit 34 sets the initial state S1 (Fig. 9) for the time point t1.

Subsequently, when the landing half-wave extraction unit 34 detects that the vertical acceleration value A3 (Fig. 8) decreases three or more consecutive times from the time point t2 while maintaining negative values such as values V2, V3, and V4, the vertical acceleration value is transited from the initial state S1 to the descending state S2 (Fig. 9). In addition, the landing half-wave extraction unit 34 regards the time point t2 at which the value is shifted to be negative for the first time as the zero-crossing point, and stores the time point as the start time TS.

After that, when the landing half-wave extraction unit 34 detects that the vertical acceleration value A3 (Fig. 8) increases three or more consecutive times from the time point t7 while maintaining negative values such as values V7, V8, and V9, the vertical acceleration value is transited from the descending state S2 to the ascending state S3 (Fig. 9). In addition, the landing half-wave extraction unit 34 regards the time point t7 at which the value is shifted to increase for the first time as the peak point, stores the time point t7 as an extremal value time TP, and stores the value V7 at that moment as an extremal value VP.

Furthermore, when the landing half-wave extraction unit 34 detects that the vertical acceleration value A3 (Fig. 8) is shifted from negative to positive such as a value V12, the vertical acceleration value is transited to the initial state S1 (Fig. 9) again, regards a time point t12 as the zero-crossing point, and stores the time point as an end time TE.

When the vertical acceleration value returns to the initial state S1 again after passing through the initial state S1, the descending state S2, and the ascending state S3 as above, it is regarded that the landing half-wave extraction unit 34 detects negative half-waves with a high probability of indicating landing of the user during walking. Hereinafter, the half-waves detected as above are referred to as temporary landing half-waves HWT.

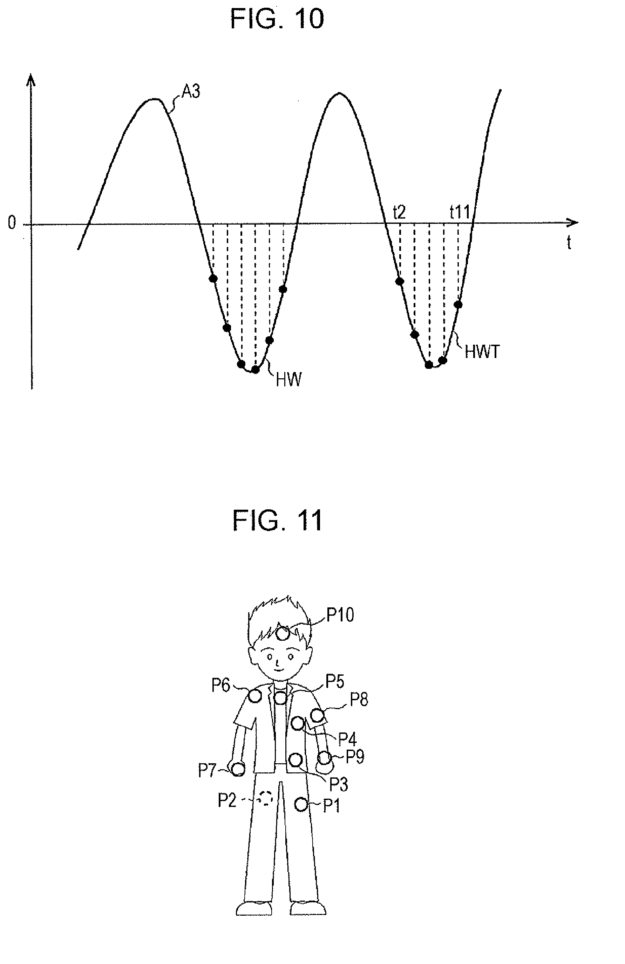

Next, the landing half-wave extraction unit 34 calculates a temporary area value MT that is a value corresponding to the area of the temporary landing half-wave HWT by integrating from the value V2 at the time point t2 at which the value is shifted to a negative value to the value V11 at the time point t11 in the temporary landing half-wave HWT as shown in Fig. 10. Then, if the temporary area value MT is equal to or more than 0.5 times an average area value MA that is the average value of the area in the previous landing half-wave HW, the landing half-wave extraction unit 34 determines the temporary landing half-wave HWT to be a regular landing half-wave HW.

At this moment, when the temporary area value MT is extremely small, the landing half-wave extraction unit 34 performs a determination process using such an area because the unit considers that the temporary landing half-wave HWT is not attributable to walking of the user, but to other causes such as an impact from outside, or the like, with a high probability.

As such, the landing half-wave extraction unit 34 determines that the landing half-wave HW is detected when the value returns to the initial state S1 again after passing through the initial state S1, descending state S2, and the ascending state S3, and the area is equal to or more than 0.5 times the previous average value.

Furthermore, the landing half-wave extraction unit 34 calculates a time interval between the extremal value time TP of the landing half-wave HW finally detected and an extremal value time TPO of a landing half-wave HWO detected immediately before as a landing half-wave interval T1. In addition, the landing half-wave extraction unit 34 calculates the time interval between the end time TE and the start time TS in the landing half-wave HW finally detected as a landing half-wavelength T2. Then, the landing half-wave extraction unit 34 supplies the landing half-wave interval T1 and the landing half-wavelength T2 to a number of steps determination processing unit 35.

The landing half-wave interval T1 and the landing half-wavelength T2 are values used in a number of steps determination process to be described later.

As such, the landing half-wave extraction unit 34 detects the landing half-wave HW and calculates the landing half-wave interval T1 and the landing half-wavelength T2 as values indicating characteristics of the landing half-wave HW.

### [1-2-3. Determination of Number of Steps]

Carrying places P1 and P2 corresponding to pockets in, for example, front and rear, or right and left sides of pants, or carrying places P3 and P4 corresponding to pockets in each part of a shirt are considered as carrying places when the user carries the smartphone 1, as shown in Fig. 11.

In addition, as other carrying places, a carrying position P5 when the user hangs the smartphone 1 around the neck with a neck-string, a carrying position P6 when the smartphone 1 is put into a shoulder bag, and a carrying position P7 when the smartphone 1 is held in a hand are also considered. In addition, the carrying positions P5 and P6 are not actual positions of the smartphone 1, but indicate positions serving as supporting points of the vertical direction.

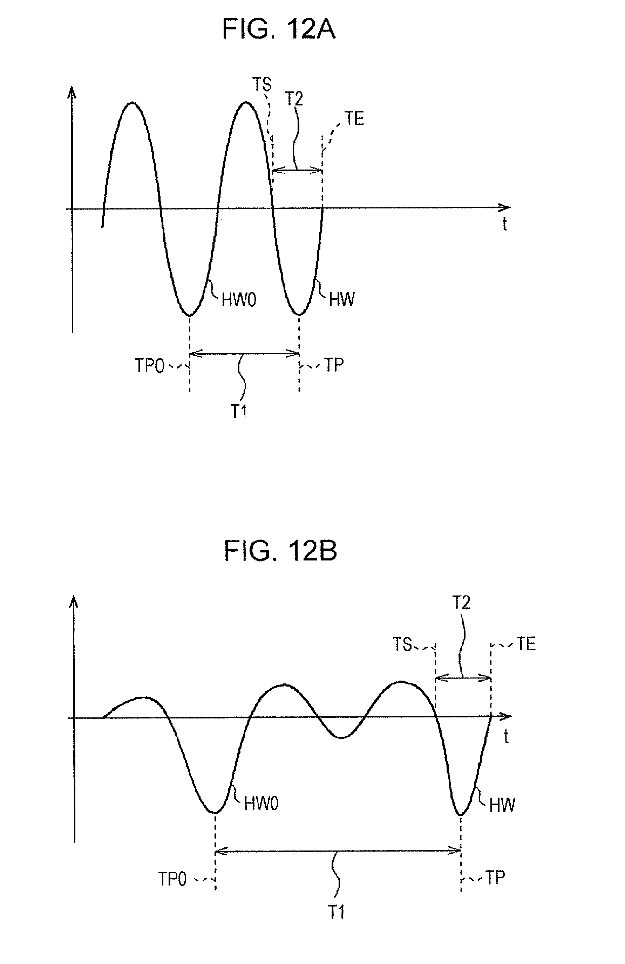

Herein, as negative half-waves appearing for the vertical acceleration value A3 are examined, half-waves with substantially the same size cyclically appear for the vertical acceleration value A3 as shown in Fig. 12A, in the case of the carrying positions P3 to P7, in other words, when the user carries the smartphone 1 on the upper body.

This is inferred from the fact that half-waves of each of the right and left feet appear as substantially the same size because the force in the vertical direction by landing of each of the right and left feet is transmitted to the upper body to the same degree.

On the other hand, in the case of the carrying positions P1 and P2, in other words, when the user carries the smartphone 1 on the lower body, relatively large half-waves and relatively small half-waves alternately appear for the vertical acceleration value A3 as shown in Fig. 12B.

This is inferred from the fact that, when the user puts the smartphone 1 into, for example, a pocket in the right side of the pants, great force is applied in the vertical direction when the right foot of the user lands, whereby relatively large half-waves appear, but on the other hand, great force is not applied in the vertical direction when the left foot of the user lands, whereby relatively small half-waves appear.

In the case of Fig. 12B, since it is difficult to discriminate relatively small half-waves that are attributable to other causes, even though the half-waves are attributable to walking by the left foot in the landing half-wave extraction unit 34 in the former stage, it is difficult to detect the half-wave as the landing half-wave HW. For this reason, the control unit 2 is not able to correctly detect the number of steps of the user if the number of landing half-waves HW is set to the number of steps without a change.

Herein, a value obtained by dividing the landing half-wave interval T1 by the landing half-wavelength T2 (hereinafter, referred to as a landing half-wave ratio R) will be examined.

If landing of feet in both the right and left sides entirely appears in the landing half-waves HW, the landing half-wave interval T1 substantially corresponds to a walking pace TW, and the landing half-wavelength T2 corresponds to about half of the walking pace TW in terms of the characteristics of the vertical acceleration value A3, and therefore, a value of the landing half-wave ratio R is considered to be about 2.

On the other hand, if landing only of either foot of the right or the left side appears in the landing half-waves HW, the landing half-wave interval T1 corresponds to about two times the walking pace TW, and the landing half-wavelength T2 corresponds to about half the walking pace TW, and therefore, a value of the landing half-wave ratio R is considered to be about 4.

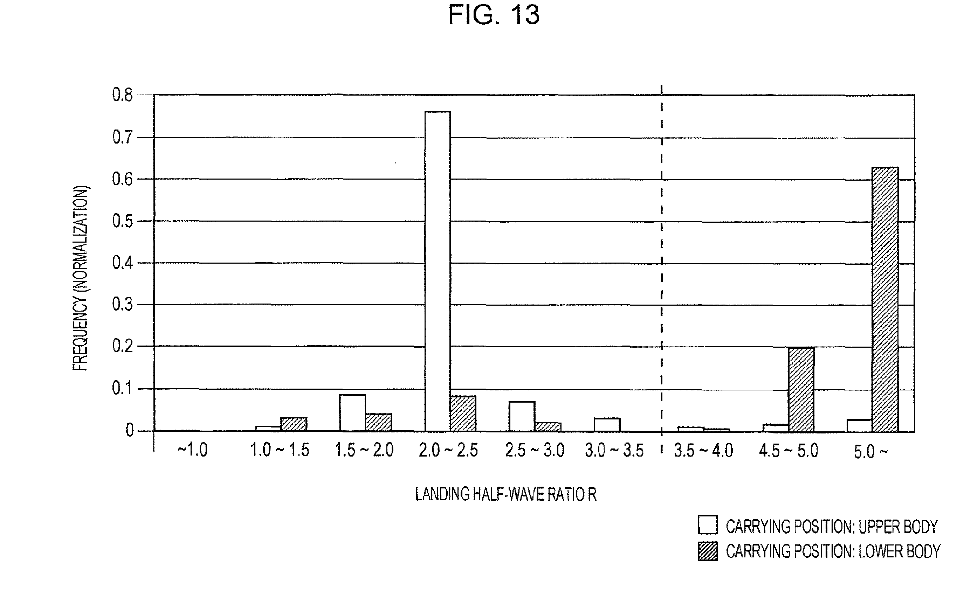

Thus, if the landing half-wave ratio R is examined when the user actually carries the smartphone 1 in various carrying positions (Fig. 11) of the body, and the value is counted by dividing into the upper body and the lower body as a frequency distribution, a frequency distribution characteristic is obtained as shown in Fig. 13. In Fig. 13, the frequency is normalized, and values of the landing half-wave ratio R are counted in intervals of 0.5.

As can be understood from Fig. 13, the landing half-wave ratio R for the upper body tends to be distributed mainly around a value of 2 to 2.5, as the ratio is set to a value of 2 to 2.5 in most cases, while there is a lower distribution at other values.

On the other hand, the landing half-wave ratio R for the lower body is concentrated in the range of a value of 4.5 to 5.0 and equal to or higher than 5.0, but rarely distributed in the range of a value of 3.0 to 3.5 and 3.5 to 4.0.

Herein, the reason that the distribution of the landing half-wave ratio R for the lower body is relatively narrow is considered to be that the distance from the feet is relatively short and the number of joints in a human body on the transmission path of force is relatively small. In addition, it is also considered that, since a pocket of pants generally has a relatively small size, there is a low probability of the smartphone 1 moving around freely in the pocket and is substantially integrally moved with the body.

On the other hand, the reason that the distribution of the landing half-wave ratio R for the upper body is relatively wide is that the distance from the feet is relatively long, and the number of joints in a human body on the transmission path of force is relatively large. In addition, it is also considered that, since a pocket of a jacket, a bag, or the like generally has a relatively large size, there is a high probability of the smartphone 1 moving freely around in the pocket, the bag, or the like, and easily moves uncontrollably.

As such, it can be understood that the values of the landing half-wave ratio R have different distribution ranges and distribution characteristics for the cases of the upper body and the lower body. Thus, a ratio threshold value TH for determining the carrying position of the smartphone 1 and for determining the number of steps corresponding to one landing half-wave HW is set to 3.5 based on the values of the landing half-wave ratio R from the frequency distribution characteristic of Fig. 13.

In other words, the number of steps determination unit 35 regards that the smartphone 1 is carried on the lower body and one landing half-wave HW corresponds to two steps if the landing half-wave ratio R is equal to or higher than the ratio threshold value TH, and regards that the smartphone 1 is carried on the upper body and one landing half-wave HW corresponds to one step if the ratio is less than the ratio threshold value TH.

Specifically, the number of steps determination unit 35 calculates the landing half-wave ratio R by dividing the landing half-wave interval T1 by the landing half-wavelength T2 in the end time TE of the landing half-wave HW, and compares the result to the ratio threshold value TH to determine whether the carrying position of the smartphone 1 is on the upper body or the lower body, in other words, the landing half-wave HW corresponds to either one step or two steps.

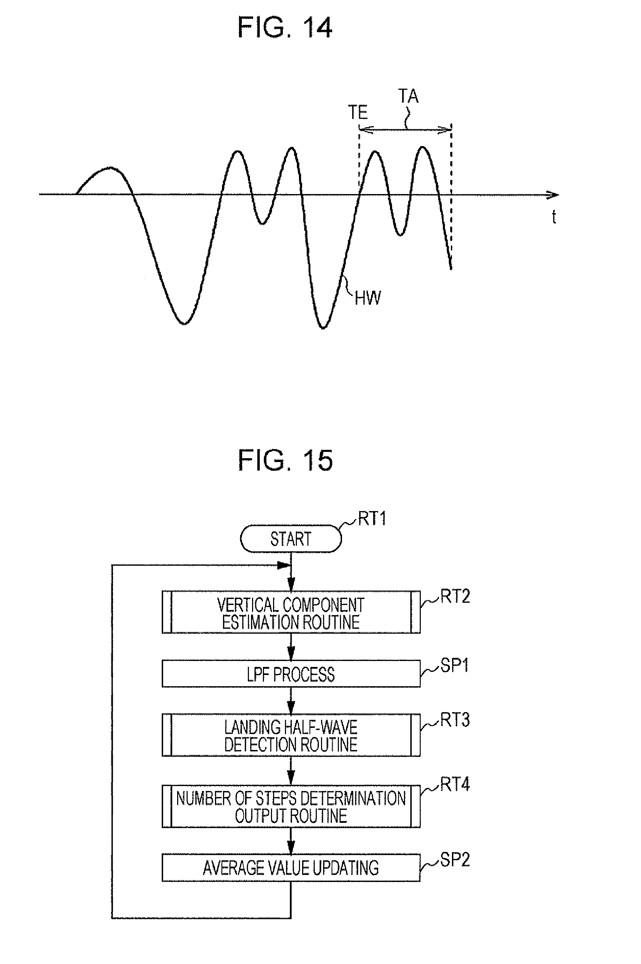

Subsequently, the number of steps determination unit 35 counts one step as the number of steps for the landing half-wave HW regardless of the determination result. In addition, the number of steps determination unit 35 counts the following one step after an average walking pace TWA (in other words, an average time for one step) for a predetermined time period of the past which has elapsed from the end time TE of the landing half-wave HW as shown in Fig. 14 only when the landing half-wave ratio R is equal to or higher than the ratio threshold value TH.

Furthermore, the number of steps determination unit 35 calculates the walking pace TW prior thereto by dividing the landing half-wave interval T1 by the determined number of steps (that is, one step or two steps), and updates the average walking pace TWA using the result.

In addition, the number of steps determination unit 35 updates the number of consecutive steps WC that is the number of steps of consecutive walking from the final stop to the present and the number of cumulative steps WS that is the number of cumulative steps from the final initialization to the present for every individual step counted.

In addition, the number of steps determination unit 35 sets a walk flag L indicating that the user is walking, the number of consecutive steps WC, the number of cumulative steps WS, the extremal value VP of the landing half-wave HW, the walking pace TW, and the average walking pace TWA as walk information F and delivers the information to another program such as a navigation program, or the like.

According to this, the navigation program, or the like, calculates a movement distance by multiplying the number of consecutive steps WC by the average width of steps of the user and estimates the latest current position by combining the result with a movement direction separately estimated when, for example, it is difficult to receive GPS signals after the current position is finally calculated, but the walk information F is acquired.

As such, the number of steps determination unit 35 determines whether the smartphone 1 is carried on either the upper body or the lower body, in other words, whether the landing half-wave HW indicates one step or two steps and counts the number of steps according to the comparison result of the landing half-wave ratio R and the ratio threshold value TH.

### [1-3. Walk Information Generation Process]

Next, the procedure of a walk information generation process when the walk information F indicating the walking situation of the user is generated in the smartphone 1 will be described in detail using flowcharts of Figs. 15 to 18.

The control unit 2 of the smartphone 1 starts the procedure of the walk information generation process RT1 of Fig. 15 by reading and executing a walk information generation program from the non-volatile memory 6 (Fig. 3) according to an instruction of executing the navigation function, and the procedure moves to a vertical component estimation routine RT2.

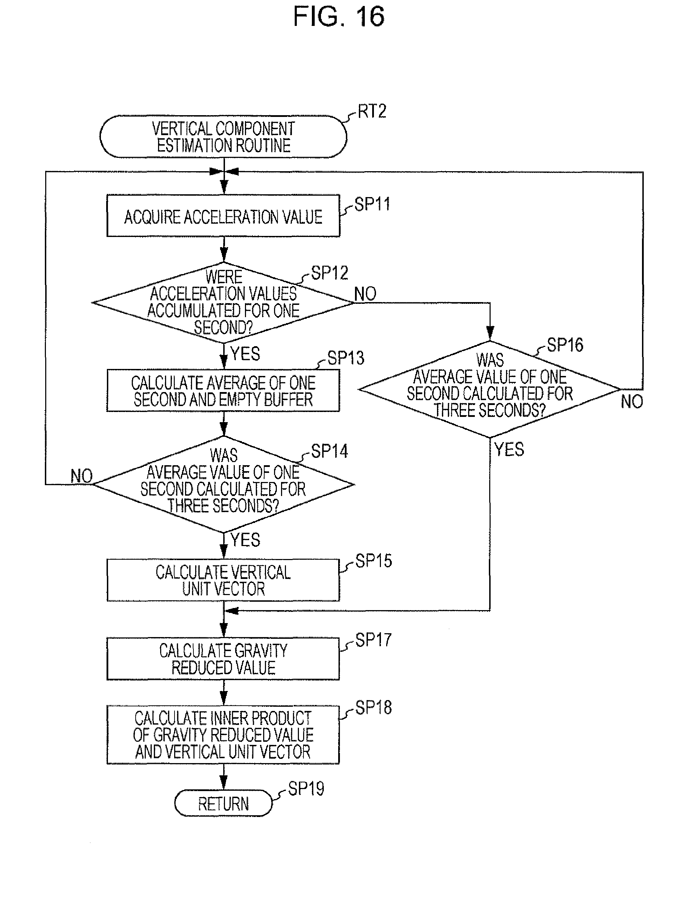

At this moment, the control unit 2 starts the vertical component estimation routine RT2 of Fig. 16 to move to Step SP11, and acquires acceleration values A1 from the acceleration sensor 21 and accumulates the values in a predetermined buffer to move to the following Step SP12.

The control unit 2 determines whether or not the acceleration values A1 for one second (in other words, 25 samples) are retained in the buffer in Step SP12. If a positive result is obtained here, the control unit 2 moves to the following Step SP13.

In Step SP13, the control unit 2 calculates and stores an average value for one second A1A that is the average value of the acceleration values A1 for one second and empties the buffer to move to the following Step SP14. The average value for one second A1A is a three-dimensional vector value. In addition, the control unit 2 stores the closest average value for one second A1A up to a maximum of three.

The control unit 2 determines whether or not the average value for one second A1A has already been calculated for three seconds in Step SP14. If a negative result is obtained here, the result indicates that the number of average values for one second A1A is insufficient for calculating the vertical unit vector UV, in other words, the accumulated number of the acceleration values A1 is not sufficient, and thus, the control unit 2 returns again to Step SP11 at that time.

On the other hand, if a positive result is obtained in Step SP14, the control unit 2 moves to the following Step SP15. The control unit 2 calculates the average value of the average values for one second A1A for three seconds in Step SP15, and moves to the following Step SP17, setting the result as the vertical unit vector UV.

On the other hand, if a negative result is obtained in Step SP12, the result indicates that the accumulated number of the acceleration values A1 is insufficient for calculating the average for one second, and the control unit 2 moves to the following Step SP16 at that time.

The control unit 2 determines whether or not the average value for one second A1A of the acceleration values A1 is calculated for three seconds in Step SP16. If a negative result is obtained here, the result indicates that the vertical unit vector UV has not been calculated and it is difficult to calculate the vertical acceleration value A2, and the control unit 2 returns to Step SP11 at that time so as to further accumulate the acceleration values A1.

On the other hand, if a positive result is obtained in Step SP16, the result indicates that the acceleration values A1 are not accumulated for calculating the average value for one second A1A, but the vertical unit vector UV has been calculated, and therefore it is possible to calculate the vertical acceleration value A2. Thus, the control unit 2 moves to the following Step SP17.

The control unit 2 calculates a gravity subtracted acceleration value A1G in which a gravity component is removed from the acceleration values A1 by subtracting the vertical unit vector UV from the latest acceleration value A1 in Step SP17, and moves to the following Step SP18.

The control unit 2 calculates the vertical acceleration value A2 that is a one-dimensional vector value by calculating an inner product of the gravity subtracted acceleration value A1G and the vertical unit vector UV in Step SP18, and moves to the following Step SP19.

As such, the control unit 2 accumulates the acceleration values A1 for three seconds after the start of the walk information generation program and calculates the vertical unit vector UV, and calculates the vertical acceleration value A2 based on acceleration values A1 subsequently acquired while updating the vertical unit vector UV every one second thereafter in the vertical component estimation routine RT2.

The control unit 2 returns to the original procedure of the walk information generation process RT1 (Fig. 15) in Step SP19, and moves to the following Step SP1.

The control unit 2 generates the vertical acceleration value A3 (Fig. 7) by removing a component which is equal to or higher than a predetermined cutoff frequency in the vertical acceleration value A2 in Step SP1, and moves to the following landing half-wave detection routine RT3.

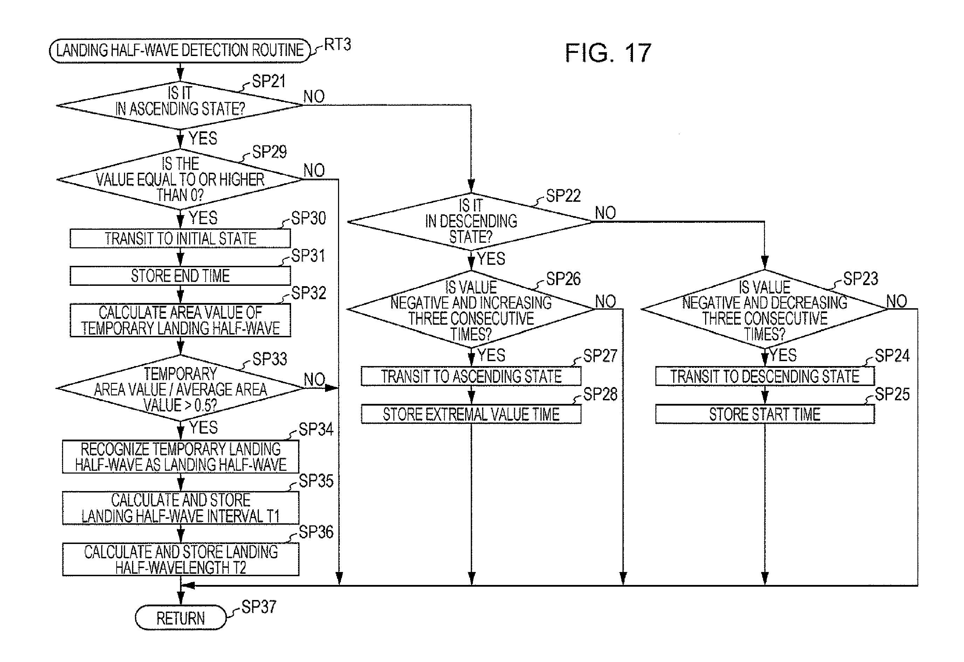

At this moment, the control unit 2 starts the landing half-wave detection routine RT3 of Fig. 17 and moves to Step SP21, and determines whether or not the vertical acceleration value A3 is in the ascending state S3 (Fig. 9). If a negative result is obtained here, the control unit 2 moves to the following Step SP22.

The control unit 2 determines whether or not the vertical acceleration value A3 is in the descending state S2 (Fig. 9) in Step SP22. If a negative result is obtained here, the result indicates that the vertical acceleration value A3 is in the initial state S1 (Fig. 9), and at this moment, the control unit 2 moves to the following Step SP23 so as to detect a timing in which the state is transited to the descending state S2.

The control unit 2 determines whether or not the value of the vertical acceleration value A3 is negative and decreases three consecutive times as the values of V2, V3, and V4 of Fig. 8 in Step SP23.

If a negative result is obtained here, the result indicates that the vertical acceleration value A3 has not changed, maintaining the initial state S1 (Fig. 9). For this reason, the control unit 2 moves to the following Step SP37 so as to acquire the following vertical acceleration value A3.

On the other hand, if a positive result is obtained in Step SP23, the control unit 2 moves the following Step SP24, the state is transited from the initial state S1 to the descending state S2 (Fig. 9), and the control unit moves to the following Step SP25.

The control unit 2 in Step SP25 stores the time point at which the value is shifted to a negative value for the first time (the time point t2 in Fig. 8) as the start time TS, and moves to the following Step SP37 so as to acquire the following vertical acceleration value A3 for detecting transition to the ascending state S3 (Fig. 9) at that time.

On the other hand, if a positive result is obtained in Step SP22, the result indicates that the state has already been transited form the initial state S1 to the descending state S2 (Fig. 9), and the control unit 2 moves to the following Step SP26 at this moment.

The control unit 2 determines whether or not the value of the vertical acceleration value A3 is negative and increases three consecutive times as the values of V7, V8, and V9 of Fig. 8 in Step SP26.

If a negative result is obtained here, the result indicates that the vertical acceleration value A3 has not changed, maintaining the descending state S2 (Fig. 9). For this reason, the control unit 2 moves to the following Step SP37 so as to acquire the following vertical acceleration value A3.

On the other hand, if a positive result is obtained in Step SP26, the control unit 2 moves to the following Step SP27, the state is transited from the descending state S2 to the ascending state S3 (Fig. 9), and the control unit moves to the following Step SP28.

In Step SP28, the control unit 2 stores the time point at which the state is shifted to increase for the first time (the time point t7 in Fig. 8) as an extremal value TP, stores the value V7 at that time as an extremal value VP, and moves to the following Step SP37 so as to acquire the following vertical acceleration value A3 for detecting transition to the initial state S1 (Fig. 9) for that time.

On the other hand, if a positive result is obtained in Step SP21, the result indicates that the state has already been transited from the initial state S1 to the ascending state S3 after passing through the descending state S2 at this moment (Fig. 9), and the control unit 2 at that time moves to the following Step SP29.

The control unit 2 determines whether or not the value of the vertical acceleration value A3 is equal to or higher than 0 in Step SP29. If a negative result is obtained here, the result indicates that the vertical acceleration value A3 has not changed, maintaining the ascending state S3 (Fig. 9). For this reason, the control unit 2 moves to the following Step SP37 so as to acquire the following vertical acceleration value A3.

On the other hand, if a positive result is obtained in Step SP29, the result indicates that the vertical acceleration value A3 is shifted to 0 or a positive value from a negative value as the value V12 of Fig. 8. At this moment, the control unit 2 moves to the following Step SP30, the state is transited from the ascending state S3 to the initial state S1 (Fig. 9), and the control unit moves to the following Step SP31.

The control unit 2 stores the time at that point (the time point t12 in Fig. 8) as the end time TE in Step SP31, and moves to the following Step SP32. In this case, negative half-waves from the start time TS to the end time TE form the temporary landing half-waves HWT (Fig. 8) .

The control unit 2 calculates and stores a temporary area value MT (Fig. 10) that is the area of the temporary landing half-wave HWT in Step SP32, and moves to the following Step SP33.

The control unit 2 determines whether or not the temporary area value MT is equal to or higher than 0.5 times an average area value MA in Step SP33. If a negative result is obtained here, the result indicates that it can be regarded that the temporary landing half-wave HWT is a waveform attributable to other causes than walking as the temporary area value MT is extremely small. At this moment, the control unit 2 moves to the following Step SP37 so as to detect the following temporary landing half-wave HWT.

On the other hand, if a positive result is obtained in Step SP33, the result indicates that the temporary area value MT of the temporary landing half-wave HWT is sufficiently large, and at this moment, the control unit 2 moves to the following Step SP34.

The control unit 2 recognizes the temporary landing half-wave HWT as the landing half-wave HW in Step SP34, and moves to the following Step SP35.

The control unit 2 calculates and stores a time interval between the extremal value time TP of the landing half-wave HW finally detected and the extremal value time TPO of the landing half-wave HW0 detected prior thereto as the landing half-wave interval T1 (Fig. 12) in Step SP35, and moves to the following Step SP36.

The control unit 2 calculates and stores a time interval between the end time TE and the start time TS in the landing half-wave HW finally detected as the landing half-wavelength T2 (Fig. 12) in Step SP36, and moves to the following Step SP37.

The control unit 2 returns to the original procedure of the walk information generation process RT1 (Fig. 15) in Step SP37, and moves to the following number of steps determination output routine RT4.

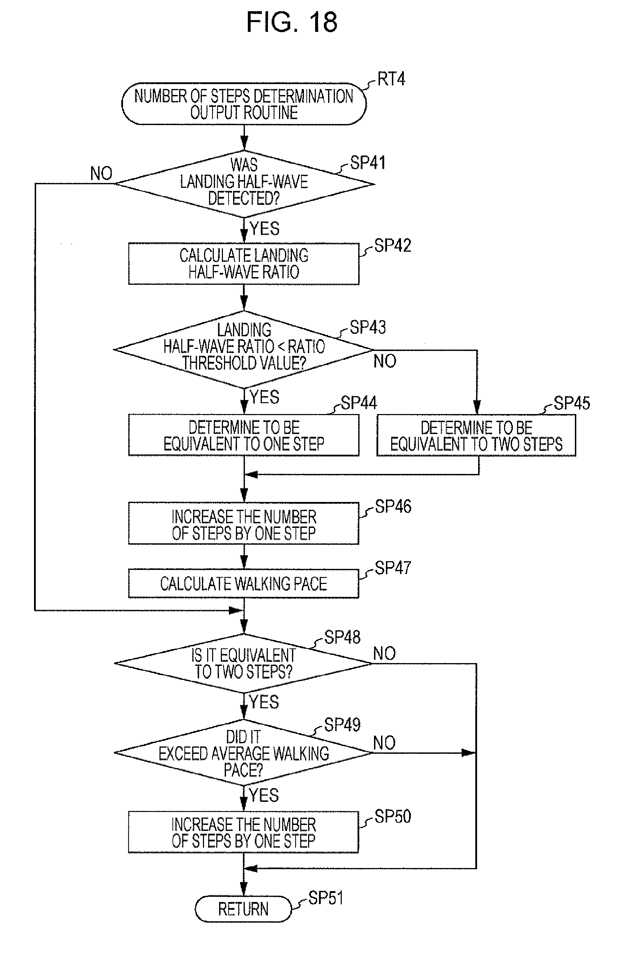

At this moment, the control unit 2 starts the number of steps determination output routine RT4 of Fig. 18 and moves to Step SP41. The control unit 2 determines whether or not the landing half-wave HW is detected in the previous landing half-wave detection routine RT3 in Step SP41. If a positive result is obtained here, the result indicates that it is necessary to perform a counting process of the number of steps according to the detection of the landing half-wave HW, and the control unit 2 at that time moves to the following Step SP42.

The control unit 2 calculates the landing half-wave ratio R by dividing the landing half-wave interval T1 by the landing half-wavelength T2 in Step SP42, and moves to the following Step SP43.

The control unit 2 determines whether or not the landing half-wave ratio R is less than the ratio threshold value TH (that is, 3.5) in Step SP43. If a negative result is obtained here, the control unit 2 moves to the following Step SP44.

The control unit 2 determines that the carrying position of the smartphone 1 is on the upper body of the user and the detected landing half-wave HW corresponds to one step based on the fact that the landing half-wave ratio R is less than the ratio threshold value TH in Step SP44, and moves to the following Step SP46.

On the other hand, if a negative result is obtained in Step SP43, the control unit 2 moves to Step SP45. The control unit 2 determines that the carrying position of the smartphone 1 is on the lower body of the user and the detected landing half-wave HW corresponds to two steps based on the fact that the landing half-wave ratio R is equal to or higher than the ratio threshold value TH in Step SP45, and moves to the following Step SP46.

The control unit 2 increases the value of the number of consecutive steps WC and the number of cumulative steps WS by one step and generates and outputs the walk information F regardless of the determined number of steps in Step S46, and moves to the following Step SP47.

The control unit 2 calculates the previous walking pace TW based on the landing half-wave interval T1 and the determined number of steps in Step SP47, and moves to the following Step SP48.

On the other hand, if a negative result is obtained in Step SP41, the result indicates that it is not necessary to perform a process regarding counting of the first step as the landing half-wave HW is not detected in the processing cycle (one loop in Fig. 15), and at this moment, the control unit 2 moves to the following Step SP48.

The control unit 2 determines whether or not the landing half-wave HW finally detected corresponds to two steps in Step SP48. If a positive result is obtained here, the result indicates that it is necessary to count one step more according to the landing half-wave HW finally detected, and at this moment, the control unit 2 moves to the following Step SP49.

The control unit 2 determines whether or not a time from the end time TE of the landing half-wave HW finally detected to the average walking pace TWA has elapsed in Step SP49. If a negative result is obtained here, the result indicates that it is not the timing to count the next one step yet, and at this moment, the control unit 2 moves to the following Step SP51.

On the other hand, if a positive result is obtained in Step SP49, the control unit 2 moves to the following Step SP50, and increases the value of the number of consecutive steps WC and the number of cumulative steps WS by one step as a counting process of the second step, generates and outputs the walk information F, and moves to the following Step SP51.

On the other hand, if a negative result is obtained in Step SP48, the result indicates that it is not necessary to count the second step for the landing half-wave HW finally detected, and at this moment, the control unit 2 moves to the following Step SP51.

The control unit 2 returns to the procedure of the original walk information generation process RT1 (Fig. 15) in Step SP51, and moves to the following Step SP2.

The control unit 2 updates the average area value MA using the finally calculated temporary area value MT in Step SP2, updates the average walking pace TWA using the finally calculated walking pace TW, and moves to the vertical component estimation routine RT2 again.

As such, the control unit 2 detects one step immediately when the user starts walking by repeating the procedure of the walk information generation process RT1 in a cycle (that is, 25 [Hz]) in which the acceleration values A1 are generated by the acceleration sensor 21 (Fig. 3), and generates the walk information F.

### [1-4. Operation and Effect]

With the configuration as above, the control unit 2 of the smartphone 1 generates the vertical acceleration value A3 that is the vertical direction component from the acceleration value A1, and detects the landing half-wave HW based on the waveform of the vertical acceleration value A3.

Subsequently, the control unit 2 calculates the landing half-wave interval T1 and the landing half-wavelength T2 at the timing in which the landing half-wave HW is detected, then calculates the landing half-wave ratio R that is the ratio of the landing half-wave interval T1 to the landing half-wavelength T2, and compares the result to the ratio threshold value TH.

If the landing half-wave ratio R is less than the ratio threshold value TH here, the control unit 2 determines whether or not the carrying position of the smartphone 1 is on the upper body of the user and the landing half-wave HW corresponds to one step. On the other hand, if the landing half-wave ratio R is equal to or higher than the ratio threshold value TH, the control unit 2 determines that the carrying position of the smartphone 1 is on the lower body of the user and the detected landing half-wave HW corresponds to two steps.

Then, the control unit 2 immediately updates the value of the number of consecutive steps WC and the number of cumulative steps WS, generates the walk information R to deliver the information to other programs, and the like.

Accordingly, the control unit 2 can detect that the user who carries the smartphone 1 is walking from the first step based on the vertical acceleration value A3 regardless of the carrying positions of either the upper body or the lower body.

At this moment, the control unit 2 can accurately determine whether the landing half-wave HW is either one step or two steps of the user based on the magnitude relationship between the appropriately decided ratio threshold value TH (that is, 3.5) and the landing half-wave ratio R, using the fact that the frequency distribution of the landing half-wave ratio R tends to greatly differ between the upper body and the lower body (Fig. 13).

In addition, the control unit 2 detects a half-wave of only a case where the half-wave has undergone a series of state transitions (Fig. 9) of "the initial state S1, the descending state S2, the ascending state S3, and the initial state S1" and the area thereof is large to a certain degree (Fig. 10) among negative half-waves included in the vertical acceleration value A3 as the landing half-wave HW.

When the carrying position is on the lower body here (Fig. 12B, or the like), it is very difficult to correctly determine that a half-wave is attributable to walking of the user because the half-wave when the foot of the opposite side to the carrying position lands is extremely small and the half-wave is similar to a half-wave attributable to other causes such as external forces.

Due to this fact, the control unit 2 detects only half-waves by landing of both feet when the carrying position of the smartphone 1 is on the upper body and half-waves by landing of the foot on the side of the carrying position when the position is on the lower body as landing half-waves HW by the landing half-wave detection routine RT3 (Fig. 17).

For this reason, the control unit 2 can set only half-waves with a high probability of being attributable to landing of feet as the landing half-waves HW, excluding half-waves attributable to other causes, and half-waves caused by landing of a foot in the opposite side to the carrying position (in other words, half-waves which are hard to be discriminated from half-waves attributable to other causes). In this case, it is possible to appropriately compensate counting of the number of steps by determining the landing half-waves HW to correspond to two steps based on the landing half-wave ratio R when the half-waves caused by landing of the foot in the opposite side to the carrying position are excluded.

Furthermore, since the control unit 2 can calculate a value corresponding to the vertical acceleration value A3 only by adding the vertical acceleration value to the temporary area value MT used in determination of the landing half-waves HW, it is possible to drastically reduce an arithmetical burden thereof and improve a real-time feature in comparison to a case of correlation which uses a complex arithmetic operation.

According to the configuration as above, the control unit 2 of the smartphone 1 detects the landing half-wave HW based on the waveform of the vertical acceleration value A3, and calculates the landing half-wave ratio R that is the ratio of the landing half-wave interval T1 to the landing half-wavelength T2 to compare the ratio to the ratio threshold value TH. At that moment, the control unit 2 determines that the landing half-wave HW corresponds to one step when the landing half-wave ratio R is less than the ratio threshold value HT, determines that the landing half-wave HW corresponds to two steps in cases other than that, and generates the walk information F by updating the value of the number of consecutive steps WC and the number of cumulative steps WS based on the determination result. Accordingly, the smartphone 1 can detect walking of the user and the first step of the number of steps with high accuracy, regardless of whether the carrying position is on the upper body or the lower body.

### <2. Other Embodiment>

In the embodiment described above, the case where the ratio threshold value TH is set to 3.5 is described based on the characteristics of the frequency distribution (Fig. 13) of the landing half-wave ratio R of each of the upper and lower bodies.

The disclosure is not limited thereto, and a value of the ratio threshold value TH may be decided, such as by setting an intermediate value of modes in, for example, both distributions or a value that becomes an intersection when an approximate curve is drawn, or the like, based on various features and characteristics of the landing half-wave ratio R of each of the upper and lower bodies. In short, in this case, a value may be possible, which is proper for determining the carrying position of the smartphone 1 and determining the number of steps corresponding to one landing half-wave HW.

In addition, in the embodiment described above, the case is described, in which one step is counted first, then the next one step is counted after the passage of the walking pace TW when it is determined that the landing half-wave ratio R is equal to or higher than the ratio threshold value TH and one landing half-wave HW corresponds to two steps.

The disclosure is not limited thereto, and for example, when display updating is not set for every individual step on the navigation screen, two steps may be counted together during the detection of the landing half-wave HW or after the passage of the walking pace TW.

Furthermore, in the embodiment described above, the case is described, in which only a case of a half-wave which has undergone a series of state transitions (Fig. 9) of "the initial state S1, the descending state S2, the ascending state S3, and the initial state S1" and the area which is large to a certain degree (Fig. 10) is detected as the landing half-wave HW.

The disclosure is not limited thereto, and for example, the landing half-wave HW may be detected under various conditions including that a correlation is used as shown Fig. 18 of Japanese Unexamined Patent Application Publication No. 2007-244495, the extremal value VP exceeds a predetermined threshold value, or the interval between the extremal value times TPs is in a certain range, or furthermore under a combination of the conditions. In addition, in such a case, each threshold value may not only be set to a fixed value, but also updated depending on necessity based on the extremal value VP of the past or the average walking pace TWA.

In short, in this case, a half-wave by landing of both feet when the carrying position of the smartphone 1 is on the upper body and a half-wave by landing of the foot in the carrying position side when the smartphone 1 is on the lower body may be detected as the landing half-wave HW.

Furthermore, in the embodiment described above, the case is described, in which the interval between the extremal value time TP of the landing half-wave HW and the extremal value time TPO of the landing half-wave HW0 prior thereto is set to the landing half-wave interval T1.

The disclosure is not limited thereto, and for example, the time interval of the characteristics that can be the target of comparison of both half-waves, such as the interval between the start times TS or the end times TE of the landing half-wave HW and the landing half-wave HWO prior thereto may be set as the landing half-wave interval T1.

Furthermore, in the embodiment described above, the case is described, in which the vertical unit vector UV is generated based on the three-dimensional acceleration value A1, the inner product of the vertical unit vector and the acceleration value A1 is set to the one-dimensional vertical acceleration value A2, and furthermore, low-frequency components thereof are set to the vertical acceleration value A3.

The disclosure is not limited thereto, and the vertical acceleration value A3 may be generated by performing various arithmetic operations based on the acceleration value A1, or the vertical acceleration value A3 may be acquired by various techniques of directly acquiring the vertical acceleration value A2 from a vertical acceleration sensor that can detect acceleration in the vertical direction and setting the low-frequency components thereof to the vertical acceleration value A3, and the like.

Furthermore, in the embodiment described above, the case is described, in which the average value for one second A1A is accumulated for three seconds and,the vertical acceleration value A2 is calculated in the vertical component estimation routine RT2 (Fig. 16) .

The disclosure is not limited thereto, and the average value for one second A1A may be accumulated for an arbitrary number of seconds such as 1.5 seconds, 5 seconds, 10 seconds, or the like to calculate the vertical acceleration value A2. In addition, instead the average value for one second A1A, an average value for an arbitrary time period, for example, an average value for 0.5 seconds that is the average value for 0.5 seconds may be used.

Furthermore, in the embodiment described above, the case is described, in which map data, which is stored in the database 8, is read from the database 8 to perform a display process of the navigation screen.

The disclosure is not limited thereto, and for example, the display process of the navigation screen may be performed such that a map server storing the map data is provided on a network such as the Internet, and the map data is acquired by making access to the map server with communication connection to the base station through the antenna 16A from the communication processing unit 16. In addition, in this case, an arithmetic process such as a route search process, a screen reproduction process, or the like may be executed in the map server, other server, or the like.

Furthermore, in the embodiment described above, the case is described, in which the various functions shown in Fig. 5 are realized by software by the control unit 2 reading the walk information generation program from the non-volatile memory 6 for the execution.

The disclosure is not limited thereto, and the various functions shown in Fig. 5 may be realized by software, and software and hardware together may be used for each of the functions.

Furthermore, in the embodiment described above, the case is described, in which the control unit 2 of the smartphone 1 as an information processing device reads the walk information generation program stored in the non-volatile memory 6 in advance for the execution.

The disclosure is not limited thereto, and the walk information generation program, which is acquired by the control unit 2 from outside through the communication processing unit 16, the external interface 17, or the like may be installed in the non-volatile memory 6 or the like for the execution.

Furthermore, in the embodiment described above, the case is described, in which the disclosure is applied to the smartphone 1. However, the disclosure is not limited thereto, and for example, the disclosure may be applied to various portable electronic equipment such as a portable navigation device, a portable music playback device, a digital camera, a portable game device, or the like, which is carried by a user, detects a walking situation, and use the result for the navigation function, pedometer function, or the like.

In the case of the portable music playback device, for example, it is considered that an arm and a wrist of the user are set to the carrying positions P8 and P9 (Fig. 11) in the forms of an arm band and a wrist band, or the head is set to the carrying position P10 in a case of a headphone-integrated type device, but such cases may be treated as the upper body in the same manner as the carrying positions P3 to P7.

Furthermore, in the embodiment described above, the case is described, in which the smartphone 1 is configured as a walking situation detection device by the acceleration sensor 21 as an acquisition unit, the vertical direction estimation unit 31 and the vertical component extraction unit 32, the landing half-wave detection unit 34 as a landing half-wave detection unit and an interval detection unit, and the number of steps determination unit 35 as a number of steps determination unit and an output unit.

The disclosure is not limited thereto, and a walking situation detection device may be constituted by an acquisition unit, a landing half-wave detection unit, an interval detection unit, a number of steps determination unit, and an output unit which form a variety of other configurations.

The present disclosure contains subject matter related to that disclosed in Japanese Priority Patent Application JP 2010-257179 filed in the Japan Patent Office on November 17, 2010, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

## Claims

1. A walking situation detection device comprising:
an acquisition unit which acquires an acceleration value according to an action of a user in a predetermined cycle;
an interval detection unit which detects a first time interval and a second time interval from the acceleration value;
a determination unit which determines a position where the user carries a terminal in his or her body based on a ratio of the first time interval to the second time interval; and
a number of steps determination unit which determines the number of steps of the user based on the determination result of the determination unit.

2. The walking situation detection device according to Claim 1, further comprising:
an output unit which outputs waking information indicating a waking situation of the user based on the determination result of the determination unit.

3. The walking situation detection device according to Claim 2, further comprising:
a movement direction presumption unit which presumes a movement direction of the user,
wherein the output unit calculates a movement distance of the user based on the number of steps and outputs the current position presumed based on the calculated movement distance and the movement direction.

4. The walking situation detection device according to Claim 3, further comprising:
a positioning unit which receives positioning signals for positioning,
wherein, when the positioning signals are not received, the output unit outputs the current position obtained by correcting the position finally measured by the positioning unit based on the number of steps and the movement direction.

5. The walking situation detection device according to Claim 2, wherein the acquisition unit acquires a vertical acceleration value indicating an acceleration component in the vertical direction according to an action of a user in a predetermined cycle,
wherein the interval detection unit detects a landing half-wave indicating landing of the user among half-waves indicating downward acceleration in the vertical acceleration value, a landing half-wave interval that is a time interval between characteristics corresponding to the landing half-wave and a landing half-wave detected prior thereto and a landing half-wavelength that is a time interval between the start point and the end point of the landing half-wave,
wherein the number of steps determination unit determines that the landing half-wave represents two steps when a landing half-wave ratio indicating a ratio of the landing half-wave interval to the landing half-wavelength exceeds a predetermined ratio threshold value and that the landing half-wave represents one step in other cases, and
wherein the output unit outputs the walk information correspond to the landing half-wave.

6. The walking situation detection device according to Claim 5, further comprising:
an average walking interval calculation unit which calculates an average walking pace that is an average pace of walking of the user based on a landing half-wave interval of the past,
wherein the output unit outputs walk information for one step corresponding to the landing half-wave when the landing half-wave is determined to represent two steps and outputs walk information for remaining one step after the passage of the average walking pace.

7. The walking situation detection device according to Claim 5, wherein the ratio threshold value is determined based on an upper body frequency distribution that is a frequency distribution of the landing half-wave ratio obtained when the walking situation detection device is carried on the upper body of the user and a lower body frequency distribution that is a frequency distribution of the landing half-wave ratio obtained when the walking situation detection device is carried on the lower body of the user.

8. The walking situation detection device according to Claim 7, wherein the ratio threshold value is determined to be a value closer to the center value of the lower body frequency distribution than to the intermediate value between the center value of the upper body frequency distribution and the center value of the lower body frequency distribution.

9. The walking situation detection device according to Claim 5, wherein, when values of the vertical acceleration value obtained in every predetermined cycle are in a descending state in which the values indicate downward acceleration and decrease to lower than a previous value, and in an ascending state in which the values continuously indicate downward acceleration and increase to higher than a previous value, and then indicate upward acceleration, the landing half-wave detection unit detects the range of the vertical acceleration value in which the values indicate the downward acceleration as the landing half-wave.

10. The walking situation detection device according to Claim 5, further comprising:
an average half-wave area calculation unit which calculates an average value of a half-wave area indicating the area of the landing half-wave detected in the past,
wherein the landing half-wave detection unit detects a half-wave, which has an area of a predetermined number of times larger than the average half-wave area among half-waves indicting downward acceleration in the vertical acceleration value.

11. The walking situation detection device according to Claim 5, wherein the interval detection unit detects a time interval between an extremal value of the landing half-wave and the extremal value of the landing half-wave detected prior thereto as the landing half-wave interval.

12. A walking situation detection method comprising:
acquiring an acceleration value according to an action of a user in a predetermined cycle;
detecting a first time interval and a second time interval from the acceleration value;
determining a position where the user carries a terminal in his or her body based on a ratio of the first time interval to the second time interval; and
determining the number of steps of the user based on the determination result of the determination.

13. A walking situation detection program which causes an information processing device to execute:
acquiring an acceleration value according to an action of a user in a predetermined cycle;
detecting a first time interval and a second time interval from the acceleration value;
determining a position where the user carries a terminal in his or her body based on a ratio of the first time interval to the second time interval; and
determining the number of steps of the user based on the determination result of the determination.
